# EUROPÄISCHE PATENTANMELDUNG

(11) **EP 3 255 924 A1**
(43) Veröffentlichungstag der Anmeldung: **13.12.2017**
(21) Anmeldenummer: 16173141.9
(22) Anmeldetag: 06.06.2016
(51) Int. Cl.: H04W 28/16, G06F 9/50, H04W 16/00, H04W 64/00, H04W 48/18, H04W 72/08, H04W 72/04

(54) **KOMMUNIKATIONSNETZWERK MIT SUBNETZEN UND EINSTELLBARER NETZWERKFUNKTION BASIEREND AUF GEOGRAPHISCHER POSITION EINES MOBILEN ENDGERÄTS**

(71) Anmelder: Deutsche Telekom AG, 53113 Bonn (DE)
(72) Erfinder: Paul, Manuel, 12683 Berlin (DE)
(74) Vertreter: Patentship Patentanwaltsgesellschaft mbH

(57) **Zusammenfassung**

Die Erfindung betrifft ein Kommunikationsnetzwerk (300) mit: einem Positionsmonitor (340), der ausgebildet ist, eine geographische Position (341) zumindest eines mobilen Kommunikationsendgeräts (330) zu überwachen; und einer Mehrzahl von Subnetzwerken (301, 302, 303), wobei zumindest ein Subnetzwerk (301) sich über einen geographischen Bereich erstreckt und folgendes umfasst: eine erste Kommunikationsentität (311), die an einer ersten geographischen Position innerhalb des geographischen Bereichs des Subnetzwerks (301) angeordnet ist, und ausgebildet ist, eine erste Netzwerkfunktion des Subnetzwerks (301) auszuführen, wobei die erste Netzwerkfunktion eine Zuordnung von Kommunikationsressourcen (312, 313, 314) des Subnetzwerks (301) zu der ersten Kommunikationsentität (311) festlegt; und einen Subnetzwericmanager (350) zur Steuerung (351) der ersten Kommunikationsentität (311), wobei der Subnetzwerkmanager (350) ausgebildet ist, basierend auf der geographischen Position (341) des zumindest einen mobilen Kommunikationsendgeräts (330) und der ersten geographischen Position der ersten Kommunikationsentität (311), die erste Netzwerkfunktion der ersten Kommunikationsentität (311) einzustellen.

## Beschreibung

Die vorliegende Erfindung betrifft ein Kommunikationsnetzwerk mit einer Mehrzahl von Subnetzwerken, insbesondere ein 5G-Kommunikationsnetzwerk mit mehreren Slices, und einem Subnetzwerkmanager zum Einstellen einer Netzwerkfunktion einer ersten Kommunikationsentität basierend auf den geographischen Positionen der ersten Kommunikationsentität und eines mobilen Kommunikationsendgeräts. Ferner betrifft die Erfindung ein Verfahren zum Einstellen der ersten Netzwerkfunktion.

Die fünfte Generation der mobilen Technologie (5G) betrifft die Anforderungen und technischen Herausforderungen der künftigen Kommunikationsnetze ab etwa dem Jahr 2020 und darüber hinaus. Damit wird eine vollständig mobile und vernetzte Gesellschaft angesprochen, die durch ein enormes Wachstum an Datenverkehr sowie gegenseitiger Vernetzung auf mehreren Ebenen charakterisiert ist.

In 5G werden neue Funkschnittstellen benötigt, um den Anforderungen an die Nutzung höherer Frequenzen gerecht zu werden, beispielsweise für neue Anwendungen wie Internet der Dinge (loT), spezielle Fähigkeiten wie z.B. geringerer Laufzeit, welche über das hinausgehen was 4G Kommunikationsnetze fähig sind zu leisten. Dabei wird 5G als ein Ende-zu-Ende System betrachtet, das sämtliche Netzwerkaspekte beinhaltet mit einem Design, das einen hohen Grad an Konvergenz ermöglicht. 5G wird die heutigen Zugangsmechanismen und deren mögliche Weiterentwicklungen vollständig nutzten, einschließlich der heutigen Festnetzzugangstechnologien vieler anderer noch zu entwickelnder Zugangstechnologien.

5G wird in einem stark heterogenen Umgebung operieren, d.h. mit mehreren Typen von Zugangstechnologien, mehrschichtigen Netzwerken, vielfältigen Typen von Kommunikationsgeräten und Nutzerinteraktionen etc. Verschiedenste Anwendungen mit diametralen Anforderungen sollen optimal unterstützt werden, z.B. ausfallsichere, robuste Kommunikation, Kommunikation mit geringen Datenraten oder breitbandige Kommunikation in dicht besiedelten Raumen. In solch einer Umgebung gibt es ein fundamentales Verlangen nach 5G, um ein nahtloses und konsistentes Nutzererlebnis über Zeit und Raum zu erfüllen. Für den Betreiber eines 5G Kommunikationsnetzes besteht die Notwendigkeit die eingesetzten Ressourcen optimal und dynamisch an die jeweiligen Anforderungen anzupassen, um die Vielzahl an Anwendungen gleichzeitig unterstützen zu können.

Deshalb besteht in 5G zum einen ein Bedürfnis daran, die Leistungsfähigkeit der Kommunikation zu steigern, insbesondere einen höheren Datendurchsatz, eine geringere Verzögerung, eine besonders hohe Zuverlässigkeit, eine weitaus höhere Verbindungsdichte und einen größeren Mobilitätsbereich bereitzustellen, zum anderen aber auch die Flexibilität im Betrieb zu erhöhen und maßgeschneiderte Funktionen mit dem geringstmöglichen Einsatz von Mitteln bereitzustellen. Diese erhöhte Leistungsfähigkeit wird zusammen mit der Fähigkeit zur Steuerung stark heterogener Umgebungen und der Fähigkeit zur Sicherung von Vertrauen, Identität und Privatsphäre der Nutzer erwartet.

Es ist die Aufgabe der vorliegenden Erfindung, ein Konzept zu schaffen, um die Flexibilität und Leistungsfähigkeit der Kommunikation zu steigern, insbesondere in 5G bezüglich der oben genannten Anforderungen.

Diese Aufgabe wird durch die Merkmale der unabhängigen Ansprüche gelöst. Vorteilhafte Weiterbildungsformen sind Gegenstand der abhängigen Ansprüche.

Eine Grundidee der Erfindung ist es, sicherzustellen, dass benötigte Funktionen am benötigten geographischen Standort zum benötigten Zeitpunkt innerhalb der Slice bereitgestellt werden. Damit kann eine stabile und vorhersagbare Latenzzeit (z.B. für taktile oder verteilte Anwendungen) ermöglicht werden. Dafür werden Funktionen und Funktionsressourcen in verlässlicher Weise lokal bereitgestellt oder an den Ort des Bedarfes migriert.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

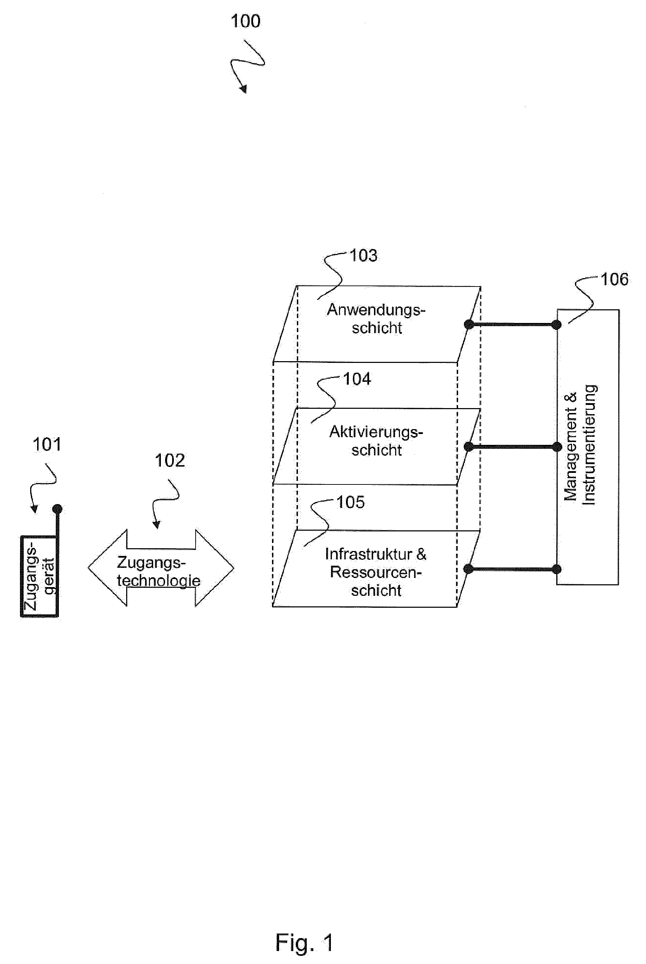

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G Systemarchitektur. Fig. 1 zeigt eine schematische Darstellung einer solchen 5G Systemarchitektur 100. Die 5G Systemarchitektur 100 umfasst einen Bereich mit 5G Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs- und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 104, 103 und der Management- & Instrumentierungsebene 106 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 106 erlaubt zum Beispiel, bestimmte, d.h. dedizierte Netzwerk Slices (Netzwerkscheiben) für eine Anwendung aufzubauen, oder eine Anwendung einem existierenden Netzwerk Slice zuzuweisen.

Die Management- & Instrumentierungsebene 106 ist der Kontaktpunkt, um die geforderten Anwendungsfälle (Use Cases, auch Geschäftsmodelle) in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 106 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und - bereitstellung zu optimieren.

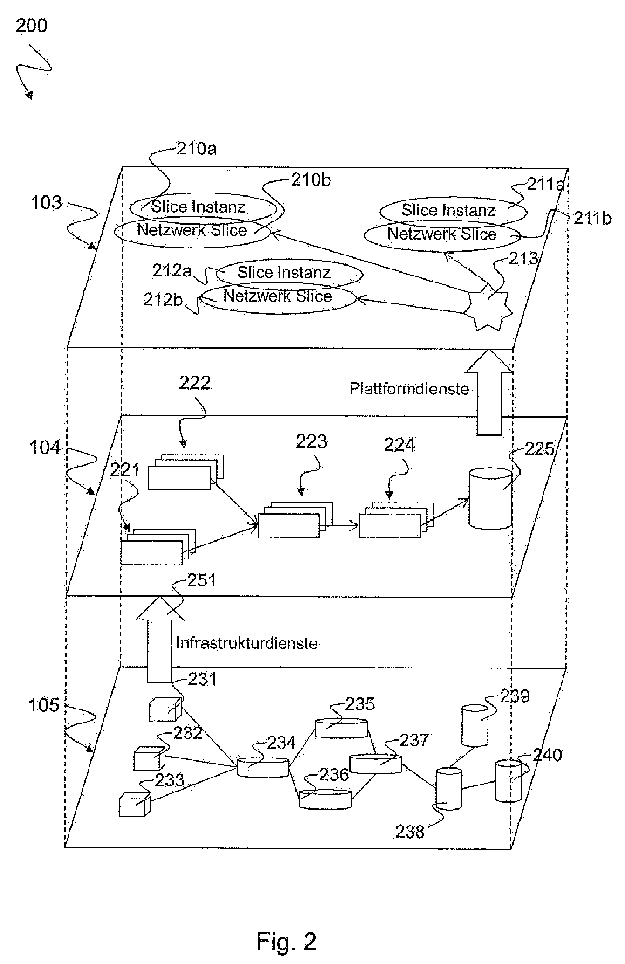

Die hier vorgestellten Geräte, Systeme und Verfahren sind dazu vorgesehen, die Leistungsfähigkeit der Kommunikation in Kommunikationsnetzen zu verbessern, insbesondere in 5G Kommunikationsnetzen mit mehreren Netzwerk Slices (Netzwerkscheiben), wie im Folgenden beschrieben. Fig. 2 zeigt eine schematische Darstellung eines 5G-Kommunikationsnetzwerks 200 mit mehreren Netzwerk Slices (Netzwerkscheiben). Das 5G-Kommunikationsnetzwerks 200 umfasst eine Infrastruktur- & Ressourcenschicht 105, eine Aktivierungsschicht 104 und eine Anwendungsschicht 103.

Die Infrastruktur- & Ressourcenschicht 105 umfasst alle physikalischen Aktiva, die einem Netzwerkbetreiber zugeordnet sind, d.h. Standorte, Kabel, Netzwerkknoten etc. Diese Schicht 105 bildet die Grundlage für alle Netzwerk Slices. Sie ist so generisch wie möglich aufgebaut ohne zu viele spezialisierte physikalische Einheiten. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von (z.B. nicht-physikalischen) Software Objekten /VNFs hinzu um das Erzeugen von jeder Art von Netzwerk Slices zu ermöglichen und so eine Plattform als Dienst der nächsthöheren Schicht 103 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekten 224 überführt werden können und in einer Objektbibliothek 225 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 104 spielt für den Erfolg dieses Konzepts eine Schlüsselrolle da sie alle Softwareobjekte umfasst kann, die notwendig sind, um die Netzwerk Slices und die entsprechenden Fertigkeiten zum Handhaben der Objekte bereitzustellen. Die Aktivierungsschicht 104 kann als eine Art von Netzwerk-Betriebssystem betrachtet werden komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instand halten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 103 umfasst alle erzeugten Netzwerk Slices 210b, 211 b, 212b und bietet diese als "Netzwerk als Service" verschiedenen Netzwerknutzern, z.B. verschiedenen Kunden an. Das Konzept erlaubt die Wiederbenutzung von definierten Netzwerk Slices 210b, 211b, 212b für verschiedene Anwender, z.B. Kunden, beispielsweise als eine neue Netzwerk Slice Instanz 210a, 211a, 212a. D.h. ein Netzwerk Slice 210b, 211b, 212b, welcher beispielsweise einer Automotive Anwendung zugeordnet ist, kann auch für Anwendungen verschiedener anderer industrieller Anwendungen genutzt werden. Die Slices Instanzen 210a, 211a, 212a, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

Gemäß einem ersten Aspekt betrifft die Erfindung ein Kommunikationsnetzwerk mit: einem Positionsmonitor, der ausgebildet ist, eine geographische Position zumindest eines mobilen Kommunikationsendgeräts zu überwachen; und einer Mehrzahl von Subnetzwerken, wobei zumindest ein Subnetzwerk sich über einen geographischen Bereich erstreckt und folgendes umfasst: eine erste Kommunikationsentität, die an einer ersten geographischen Position innerhalb des geographischen Bereichs des Subnetzwerks angeordnet ist, und ausgebildet ist, eine erste Netzwerkfunktion des Subnetzwerks auszuführen, wobei die erste Netzwerkfunktion eine Zuordnung von Kommunikationsressourcen des Subnetzwerks zu der ersten Kommunikationsentität festlegt; und einen Subnetzwerkmanager zur Steuerung der ersten Kommunikationsentität, wobei der Subnetzwerkmanager ausgebildet ist, basierend auf der geographischen Position des zumindest einen mobilen Kommunikationsendgeräts und der ersten geographischen Position der ersten Kommunikationsentität, die erste Netzwerkfunktion der ersten Kommunikationsentität einzustellen.

Aufgrund des Subnetzwerk-Aufbaus des Kommunikationsnetzwerks kann die Leistungsfähigkeit der Kommunikation gesteigert werden. Insbesondere kann damit ein höherer Datendurchsatz, eine geringere Verzögerung, eine besonders hohe Zuverlässigkeit, eine weitaus höhere Verbindungsdichte und ein größerer Mobilitätsbereich erlangt werden.

Durch die Steuerung der ersten Kommunikationsentität abhängig von einer geographischen Position der ersten Kommunikationsentität und einer geographischen Position von mobilem Kommunikationsendgerät kann sichergestellt werden, dass dem mobilen Kommunikationsendgerät immer die jeweils am entsprechenden geographischen Ort benötigten Kommunikationsressourcen zur Verfügung stehen. Damit erhöht sich die Flexibilität der Kommunikation und es können Kommunikationsressourcen geschont werden, indem sie nicht unnötig vorgehalten werden müssen, sondern zweckgerichtet eingesetzt werden können.

Mit diesen geographisch veränderbaren Netzwerkfunktionen können die verschiedensten Netzwerkentitäten, wie z.B. Festnetz- und Mobilfunknetzkomponenten mit Zugangsknoten, Cloud-Knoten, Verarbeitungsknoten, Speicherknoten, 5G Geräten wie z.B. Mobiltelefone, tragbare Geräte, CPEs, Maschinenkommunikationsmodule und andere Netzwerkknoten und zugehörige Links abhängig von der geographischen Position des mobilen Endgeräts zielgerichtet angesteuert bzw. betrieben werden. Die Netzfunktionen können 5G Geräten vielfältige und konfigurierbare Fähigkeiten verleihen und sie beispielsweise abhängig von dem jeweiligen Kontext als Computer/Speicher Ressource arbeiten lassen. Die Netzwerkfunktionen können entsprechende API (Applikationsprogramm-Interface) bereitstellen, um diese Ressourcen zur Verfügung zu stellen. Damit lässt sich ein sehr flexibles, insbesondere geographisch flexibles Netzwerkdesign realisieren.

Durch die geographische Vernetzung der einzelnen Netzwerkfunktionen untereinander kann der Subnetzwerkmanager die Komplexität und Leistungsfähigkeit des gesamten Kommunikationsnetzwerks erhöhen, die Komplexität aber zugleich hinter den Netzwerk Slices verborgen halten. Beispielsweise kann ein Nutzer lediglich über einen KPI (Key Performance Indikator) eine mobile Breitband-Slice erzeugen ohne dabei spezifische Features wie individuelle lokale Antennenbedeckung, Backhaul-Verbindungen und spezifische Parametrisierungsgrade spezifizieren zu müssen. Über die Vernetzung kann der Subnetzwerkmanager eine geographisch offene Umgebung unterstützen und es ermöglichen, Netzwerkfunktionen auf Anforderung hinzuzufügen oder zu löschen, je nach Wunsch und geographischer Position des Anwenders. Dies steigert den Funktionsumfang des gesamten Kommunikationsnetzwerks.

In einer Ausführungsform ist das Kommunikationsnetzwerk ein Netzwerk einer fünften Generation (5G) oder einer weiteren Generation, und das Subnetzwerk ist ein Slice des Kommunikationsnetzwerkes.

Damit können alle Vorteile der 5G Netzstruktur realisiert werden, wie beispielsweise höhere Funkfrequenzen mit höherem Datendurchsatz, neue Anwendungen, wie beispielsweise Internet der Dinge, spezielle Fähigkeiten wie z.B. geringere Laufzeit, welche über das hinausgehen was 4G Kommunikationsnetze fähig sind zu leisten. Das Kommunikationsnetz kann ein Ende-zu-Ende System bieten, das sämtliche Netzwerkaspekte beinhaltet mit einem hohen Grad an Konvergenz. Ferner können die existierenden Zugangsmechanismen und deren mögliche Weiterentwicklungen vollständig genutzt werden.

In einer Ausführungsform des Kommunikationsnetzwerks ist der Subnetzwerkmanager ausgebildet, die erste Netzwerkfunktion basierend auf einem Ressourcenanforderungsprofil des zumindest einen mobilen Kommunikationsendgeräts und einer Verfügbarkeit von Kommunikationsressourcen der ersten Kommunikationsentität einzustellen.

Damit kann der Vorteil erzielt werden, dass die Kommunikationsressourcen des Kommunikationsnetzwerks zielgerichtet und bedarfsorientiert abhängig von dem Anforderungsprofil des Nutzers an der jeweiligen geographischen Lokation eingesetzt werden können. Das bedeutet eine effiziente Nutzung der Ressourcen.

In einer Ausführungsform des Kommunikationsnetzwerks ist der Subnetzwerkmanager ausgebildet, eine Identifizierung des zumindest einen mobilen Kommunikationsendgeräts zu empfangen, und die erste Netzwerkfunktion der ersten Kommunikationsentität basierend auf der Identifizierung des zumindest einen mobilen Kommunikationsendgeräts einzustellen.

Damit kann der Vorteil erzielt werden, dass die Kommunikationsressourcen je nach Identifizierung des Kommunikationsendgeräts bereitgestellt werden können. Die Identifizierung kann beispielsweise angeben welche Dienste das jeweilige UE nutzen darf und so dem UE die notwendigen Ressourcen entsprechend seiner geographischen Position zuweisen.

In einer Ausführungsform des Kommunikationsnetzwerks umfasst das Subnetzwerk eine zweite Kommunikationsentität, die an einer zweiten geographischen Position innerhalb des geographischen Bereichs des Subnetzwerks angeordnet ist, und ausgebildet ist, eine zweite Netzwerkfunktion des Subnetzwerks auszuführen, wobei die zweite Netzwerkfunktion eine Zuordnung von Kommunikationsressourcen des Subnetzwerks zu der zweiten Kommunikationsentität festlegt.

Damit kann der Vorteil erzielt werden, dass erste und zweite Kommunikationsentität verschiedene Netzwerkfunktionen ausführen können, so dass eine geographisch abhängige Zuordnung von Ressourcen des Netzwerks zum UE durchgeführt werden kann. Beispielsweise kann an einem Standort des UE im Netzzentrum mit guter Funkabdeckung eine geringere Ressourcenzuteilung zu dem UE erfolgen als an einem Standort des UE am Netzwerkrand, wo die Funkabdeckung schlechter ist. Am Netzwerkrand kann dem UE beispielsweise eine höhere Prozessorleistung zugewiesen werden, um damit eine bessere Kanalschätzung bzw. Detektion von Störungen zu erzielen.

In einer Ausführungsform des Kommunikationsnetzwerks ist der Subnetzwerkmanager ausgebildet, basierend auf der geographischen Position des zumindest einen mobilen Kommunikationsendgeräts und der zweiten geographischen Position der zweiten Kommunikationsentität, die zweite Netzwerkfunktion der zweiten Kommunikationsentität einzustellen.

Durch die Steuerung der zweiten Kommunikationsentität abhängig von einer geographischen Position der zweiten Kommunikationsentität und einer geographischen Position des mobilen Kommunikationsendgeräts kann sichergestellt werden, dass dem mobilen Kommunikationsendgerät immer die jeweils am entsprechenden geographischen Ort benötigten Kommunikationsressourcen zur Verfügung stehen. Ferner kann ein Umschalten von der ersten Netzwerkfunktion auf die zweite Netzwerkfunktion realisiert werden, wenn die zweite Kommunikationsentität näher am UE liegt als die erste Kommunikationsentität. Damit erhöht sich die Flexibilität der Kommunikation und es können Kommunikationsressourcen der ersten Kommunikationsentität wieder freigegeben werden, wenn das UE sich aus dem geographischen Einflussbereich der ersten Kommunikationsentität entfernt und in den geographischen Einflussbereich der zweiten Kommunikationsentität gelangt.

In einer Ausführungsform des Kommunikationsnetzwerks ist der Subnetzwerkmanager ausgebildet, basierend auf der geographischen Position des zumindest einen mobilen Kommunikationsendgeräts, der ersten geographischen Position der ersten Kommunikationsentität und der zweiten geographischen Position der zweiten Kommunikationsentität eine dem mobilen Kommunikationsendgerät am nächstgelegene Kommunikationsentität zu bestimmen, wobei die nächstgelegene Kommunikationsentität die erste oder die zweite Kommunikationsentität ist.

Damit kann der Vorteil erzielt werden, dass für die Ressourcenzuordnung stets die dem UE nächstgelegene Kommunikationsentität zuständig ist, so dass sich eine Zuweisung von Ressourcen über weite Wege innerhalb des geographischen Bereichs des Subnetzes vermeiden lässt. Damit lässt sich die Kommunikation effizient und ressourcenschonend aufbauen oder umbauen.

In einer Ausführungsform des Kommunikationsnetzwerks ist der Subnetzwerkmanager ausgebildet, der nächstgelegenen Kommunikationsentität Kommunikationsressourcen des Subnetzwerks gemäß der Netzwerkfunktion der nächstgelegenen Kommunikationsentität zuzuordnen.

Dies bringt den Vorteil, dass sich lange Wege zur Ressourcenbereitstellung vermeiden lassen. Die Netzwerkfunktion der nächstgelegenen Kommunikationsentität erlaubt ein schnelles zu zuverlässiges Bereitstellen von verschiedensten Kommunikationsressourcen, wie z.B. Festnetz- und Mobilfunknetzkomponenten mit Zugangsknoten, Cloud-Knoten, Verarbeitungsknoten, Speicherknoten, 5G Geräten wie z.B. Mobiltelefone, tragbare Geräte, CPEs, Maschinenkommunikationsmodule und andere Netzwerkknoten und zugehörige Links abhängig von der geographischen Position des mobilen Endgeräts. Damit lässt sich ein sehr flexibles, insbesondere geographisch flexibles Netzwerkdesign realisieren.

In einer Ausführungsform des Kommunikationsnetzwerks ist der Subnetzwerkmanager ausgebildet, dem mobilen Kommunikationsendgerät zugeordnete Kommunikationsressourcen der nicht nächstgelegenen Kommunikationsentität aus den beiden Kommunikationsentitäten freizugeben.

Durch das Freigeben von Kommunikationsressourcen der nicht nächstgelegenen Kommunikationsentität wird eine sehr effiziente Nutzung und Verwaltung von Netzwerkressourcen ermöglicht. Die Kommunikationsressourcen der nicht nächstgelegenen Kommunikationsentität können so bereits wieder einem anderen UE zur Verfügung gestellt werden, das in den geographischen Bereich der nicht-nächstgelegenen Kommunikationsentität gelangt.

In einer Ausführungsform des Kommunikationsnetzwerks ist der Subnetzwerkmanager ausgebildet, die Netzwerkfunktion der nicht nächstgelegenen Kommunikationsentität und die Netzwerkfunktion der nächstgelegenen Kommunikationsentität zum dynamischen Umschalten von Kommunikationsressourcen des Subnetzwerks von der nicht nächstgelegenen Kommunikationsentität zu der nächstgelegenen Kommunikationsentität anzusteuern.

Damit kann der Vorteil der dynamischen Ressourcenbereitstellung erzielt werden, so dass die Kommunikationsressourcen für eine weit größere Anzahl von mobilen Kommunikationsendgeräten ausreicht als bei statischer Ressourcenbereitstellung der Fall wäre. Das Überlastverhalten des Kommunikationsnetzwerks wird damit weniger kritisch.

In einer Ausführungsform des Kommunikationsnetzwerks ist der Subnetzwerkmanager ausgebildet, der nicht nächstgelegenen Kommunikationsentität eine erste Instanz der ersten Netzwerkfunktion zuzuordnen und der nächstgelegenen Kommunikationsentität eine zweite Instanz der ersten Netzwerkfunktion zuzuordnen.

Durch die Instanziierung der ersten Netzwerkfunktion wird der Vorteil realisiert, dass die gleichen Kommunikationsressourcen von der ersten Netzwerkfunktion als auch von der ersten oder jeder weiteren Instanz der ersten Netzwerkfunktion bereitgestellt werden. Damit vereinfacht sich das Bereitstellen der Kommunikationsressourcen im Kommunikationsnetzwerk, was insbesondere beim Kommunikationsaufbau von vielen mobilen Kommunikationsendgeräten von Vorteil ist.

In einer Ausführungsform des Kommunikationsnetzwerks ist der Subnetzwerkmanager ausgebildet, die erste Netzwerkfunktion zur Zuordnung von leerlaufenden Kommunikationsressourcen des Subnetzwerks zu der ersten Kommunikationsentität oder zur Zuordnung von leerlaufenden Kommunikationsressourcen eines anderen Subnetzwerks zu der ersten Kommunikationsentität einzustellen.

Damit wird der Vorteil erzielt, dass leerlaufende Kommunikationsressourcen des Subnetzwerks weiter genutzt werden, was die Effizienz des Kommunikationsnetzwerks steigert und die Kosten senkt.

In einer Ausführungsform umfasst das Kommunikationsnetzwerk eine zentrale Kommunikationsressource, und der Subnetzwerkmanager ist ausgebildet, die erste Netzwerkfunktion der ersten Kommunikationsentität zur Zuordnung der zentralen Kommunikationsressource zu der ersten Kommunikationsentität einzustellen.

Damit wird der Vorteil erzielt, dass die zentrale Kommunikationsressource von vielen mobilen Kommunikationsendgeräten genutzt werden kann, so dass sich der Aufwand der Bereitstellung von Kommunikationsressourcen reduzieren lässt, da die zentrale Kommunikationsressource nur selten leerläuft.

In einer Ausführungsform umfasst das Kommunikationsnetzwerk einen zentralen Pool von Kommunikationsressourcen, und der Subnetzwerkmanager ist ausgebildet, die erste Netzwerkfunktion der ersten Kommunikationsentität zur Zuordnung von Kommunikationsressourcen des zentralen Pools von Kommunikationsressourcen zu der ersten Kommunikationsentität einzustellen.

Damit lässt sich der Vorteil realisieren, dass die Kommunikationsressourcen aus dem zentralen Pool für jede Kommunikationsaufgabe genutzt werden können, so dass der Pool eine effiziente Verwaltung der Kommunikationsressourcen erlaubt.

Gemäß einem zweiten Aspekt betrifft die Erfindung ein Verfahren zur Steuerung von Kommunikationsressourcen eines Kommunikationsnetzwerks mit einer Mehrzahl von Subnetzwerken, wobei zumindest ein Subnetzwerk sich über einen geographischen Bereich erstreckt und eine erste Kommunikationsentität umfasst, die an einer ersten geographischen Position innerhalb des geographischen Bereichs des Subnetzwerks angeordnet ist, wobei das Verfahren die folgenden Schritte aufweist: Überwachen einer geographischen Position zumindest eines mobilen Kommunikationsendgeräts; Einstellen einer ersten Netzwerkfunktion zum Zuordnen von Kommunikationsressourcen des Subnetzwerks zu der ersten Kommunikationsentität basierend auf der geographischen Position des zumindest einen mobilen Kommunikationsendgeräts und der ersten geographischen Position der ersten Kommunikationsentität; und Ausführen der ersten Netzwerkfunktion des Subnetzwerks durch die erste Kommunikationsentität.

Aufgrund des Subnetzwerk-Aufbaus des Kommunikationsnetzwerks kann das Verfahren die Leistungsfähigkeit der Kommunikation steigern. Insbesondere kann mit dem Verfahren ein höherer Datendurchsatz, eine geringere Verzögerung, eine besonders hohe Zuverlässigkeit, eine weitaus höhere Verbindungsdichte und ein größerer Mobilitätsbereich der Kommunikation erlangt werden.

Durch das Einstellen der ersten Netzwerkfunktion der ersten Kommunikationsentität abhängig von einer geographischen Position der ersten Kommunikationsentität und einer geographischen Position des mobilem Kommunikationsendgeräts kann sichergestellt werden, dass dem mobilen Kommunikationsendgerät immer die jeweils am entsprechenden geographischen Ort benötigten Kommunikationsressourcen zur Verfügung stehen. Damit erhöht sich die Flexibilität der Kommunikation und es können Kommunikationsressourcen geschont werden, indem sie nicht unnötig vorgehalten werden müssen, sondern zweckgerichtet eingesetzt werden können.

Weitere Ausführungsbeispiele werden Bezug nehmend auf die beiliegenden Zeichnungen erläutert. Es zeigen:
Fig. 1 eine schematische Darstellung einer 5G Systemarchitektur 100;
Fig. 2 eine schematische Darstellung eines 5G-Kommunikationsnetzwerks mit mehreren Slices (Netzwerkscheiben) 200;
Fig. 3 eine schematische Darstellung eines Kommunikationsnetzwerkes 300 gemäß einer beispielhaften Ausführungsform mit mehreren Subnetzwerken 301, 302, 303, einem Positionsmonitor 340 und einem Subnetzwerkmanager 350;
Fig. 4 eine schematische Darstellung eines Kommunikationsnetzwerkes 400 gemäß einer beispielhaften Ausführungsform mit einem Subnetzwerk 301 mit zentralen und dezentralen Netzwerkfunktionen, einem Positionsmonitor 340 und einem Subnetzwerkmanager 350, das ein Beispiel einer Realisierung des Kommunikationsnetzwerkes 300 gemäß Figur 3 darstellt;
Fig. 5 eine schematische Darstellung eines Kommunikationsnetzwerkes 500 gemäß einer beispielhaften Ausführungsform, bei dem die Netzwerkfunktionen an der Nutzerposition gemäß geographischem Bedarfsverlauf instanziiert werden;
Fig. 6 eine schematische Darstellung eines Kommunikationsnetzwerkes 600 gemäß einer beispielhaften Ausführungsform, bei dem auf leer-laufende Instanzen von Netzwerkfunktionen zugegriffen wird;
Fig. 7 eine schematische Darstellung eines Kommunikationsnetzwerkes 700 gemäß einer beispielhaften Ausführungsform, bei dem vorhandene Netzwerkfunktionen von zentraler Position auf den jeweiligen mobilen Standort migriert werden;
Fig. 8 eine schematische Darstellung eines Kommunikationsnetzwerkes 800 gemäß einer beispielhaften Ausführungsform, bei dem vorhandene Netzwerkfunktionen von einem zentralen Ressourcenpool auf den jeweiligen mobilen Standort transferiert werden;
Fig. 9 eine schematische Darstellung der dynamischen Implementierung eines Kommunikationsnetzwerkes 900 mittels Schalter gemäß einer beispielhaften Ausführungsform; und
Fig. 10 eine schematische Darstellung eines Verfahrens 900 zur Steuerung von Kommunikationsressourcen eines Kommunikationsnetzwerks mit einer Mehrzahl von Subnetzwerken gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

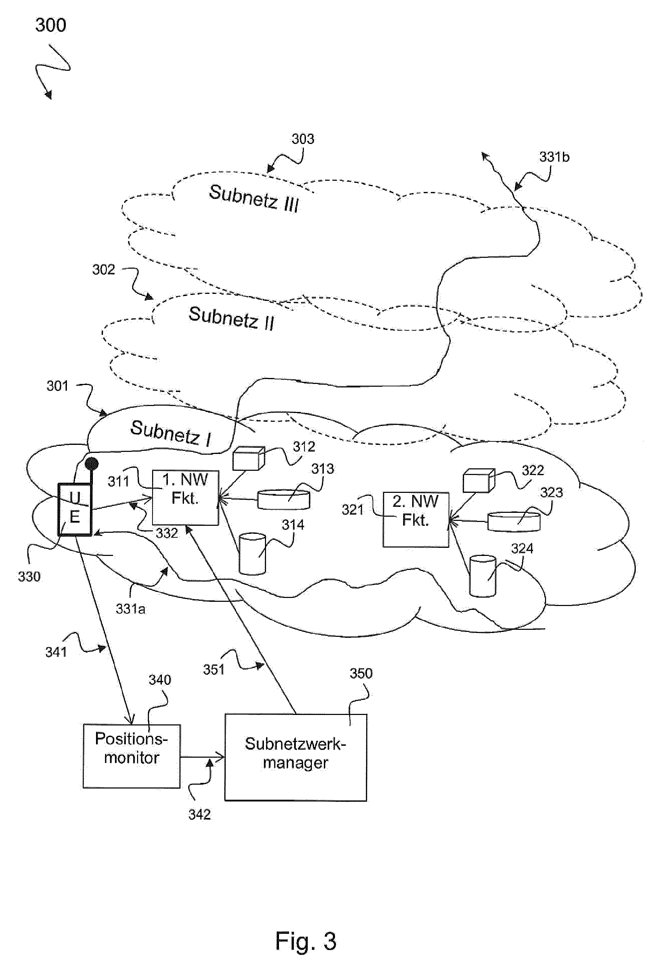

Fig. 3 zeigt eine schematische Darstellung eines Kommunikationsnetzwerkes 300 gemäß einer beispielhaften Ausführungsform mit mehreren Subnetzwerken 301, 302, 303, einem Positionsmonitor 340 und einem Subnetzwerkmanager 350.

Der Positionsmonitor 340 überwacht eine geographische Position 341 eines oder mehrerer mobiler Kommunikationsendgeräte, von denen Figur 3 beispielhaft ein mobiles Kommunikationsendgerät 330 zeigt. Beispielsweise kann der Positionsmonitor 340 dazu auf Lokalisierungsdienste des Kommunikationsnetzwerks 300 zurückgreifen oder die mobilen Kommunikationsendgeräte können mittels Satellitenpositionsbestimmung ihre geographischen Positionen feststellen und diese Daten an den Positionsmonitor 340 übertragen.

Die Subnetzwerke 301, 302, 303 erstrecken sich über einen jeweiligen geographischen Bereich, wobei die geographischen Bereiche der einzelnen Subnetzwerke sich überlappen können oder aneinander angrenzen können oder sogar beabstandet zueinander angeordnet sein können.

Das erste Subnetzwerk, im Folgenden der Einfachheit halber als Subnetzwerk bezeichnet, umfasst eine erste Kommunikationsentität 311, die an einer ersten geographischen Position innerhalb des geographischen Bereichs des Subnetzwerks 301 angeordnet ist, beispielsweise an einer Grenze, in einer Mitte oder an einer anderen geographischen Position innerhalb des geographischen Bereichs des Subnetzwerks 301. Die erste Kommunikationsentität 311 führt eine erste Netzwerkfunktion des Subnetzwerks 301 aus. Die erste Netzwerkfunktion legt eine Zuordnung von Kommunikationsressourcen des Subnetzwerks 301 zu der ersten Kommunikationsentität 311 fest, beispielsweise Kommunikationsressourcen 312, 313, 314 wie Netzwerkknoten, Prozessoren, Speicher, etc., z.B. Ressourcen wie oben unter Fig. 2 beschrieben.

Der Subnetzwerkmanager 350 dient der Steuerung 351 der ersten Kommunikationsentität 311. Der Subnetzwerkmanager 350 steuert bzw. stellt basierend auf der geographischen Position 341 des einen oder der mehreren mobilen Kommunikationsendgeräte 330 und der ersten geographischen Position der ersten Kommunikationsentität 311 die erste Netzwerkfunktion der ersten Kommunikationsentität 311 ein.

Das Kommunikationsnetzwerk 300 ist beispielsweise ein Netzwerk einer fünften Generation 5G oder einer weiteren Generation, z.B. ein Netzwerk 100, 200 wie oben zu den Figuren 1 und 2 näher ausgeführt. Das Subnetzwerk 301 ist beispielsweise ein Slice eines solchen Kommunikationsnetzwerkes 100, 200, 300.

Der Subnetzwerkmanager 350 stellt die erste Netzwerkfunktion beispielsweise basierend auf einem Ressourcenanforderungsprofil des mobilen Kommunikationsendgeräts 330 und einer Verfügbarkeit von Kommunikationsressourcen 312, 313, 314 der ersten Kommunikationsentität 311 ein.

Der Subnetzwerkmanager 350 kann eine Identifizierung (z.B. eine IMSI, International Mobile Subscriber Identification) des mobilen Kommunikationsendgeräts 330 empfangen, beispielsweise über eine RAN (Radio Network Access) Übertragung 332, z.B. über ein Zugangsnetz, in dem eine oder mehrere Basisstationen oder Funkzellen den Zugang des mobilen Kommunikationsendgeräts 330 zum Kommunikationsnetzwerk 300 bereitstellen. Mittels der Identifizierung kann der Subnetzwerkmanager 350 eine Kommunikationsverbindung des mobilen Kommunikationsendgeräts 330 zum Kommunikationsnetzwerk 300 aufbauen. Der Subnetzwerkmanager 350 kann die erste Netzwerkfunktion der ersten Kommunikationsentität 311 basierend auf der Identifizierung des mobilen Kommunikationsendgeräts bzw. UEs 330 einzustellen und damit für eine geeignete Ressourcenbereitstellung für das mobile Kommunikationsendgerät 330 sorgen. Über die Identifizierung des UE 330 können beispielsweise Dienste zugewiesen werden, welche bestimmte Ressourcen benötigen. Die Zuordnung von Identifikation zu Ressourcen oder von Diensten zu Ressourcen kann durch die erste Netzwerkfunktion abgebildet werden.

Das Subnetzwerk kann eine Vielzahl von Kommunikationsentitäten mit entsprechenden Netzwerkfunktionen umfassen, die jeweils an unterschiedlichen oder auch gleichen geographischen Positionen innerhalb des geographischen Bereichs, den das Subnetzwerk einnimmt angeordnet sein können. In Fig. 3 ist als Beispiel einer weiteren Kommunikationsentität des Subnetzwerks 301 eine zweite Kommunikationsentität 321 mit einer zweiten Netzwerkfunktion dargestellt, die an einer zweiten geographischen Position innerhalb des geographischen Bereichs des Subnetzwerks 301 angeordnet ist. Die zweite Kommunikationsentität führt eine zweite Netzwerkfunktion des Subnetzwerks 301 aus, welche eine Zuordnung von Kommunikationsressourcen 322, 323, 324 des Subnetzwerks 301 zu der zweiten Kommunikationsentität 321 festlegt. Die Kommunikationsressourcen 322, 323, 324 können verschieden sein zu den Kommunikationsressourcen 312, 313, 314, welche der ersten Kommunikationsentität 311 zugeordnet sind, wie in Fig. 3 dargestellt. Es können auch bestimmte oder sogar alle der Kommunikationsressourcen sowohl der ersten 311 als auch der zweiten 321 Kommunikationsentität zugeordnet sein.

Der Subnetzwerkmanager 350 kann basierend auf der geographischen Position des mobilen Kommunikationsendgeräts 330 und der zweiten geographischen Position der zweiten Kommunikationsentität 321 die zweite Netzwerkfunktion der zweiten Kommunikationsentität 321 einstellen.

Der Subnetzwerkmanager 350 kann basierend auf der geographischen Position des mobilen Kommunikationsendgeräts 330, der ersten geographischen Position der ersten Kommunikationsentität 311 und der zweiten geographischen Position der zweiten Kommunikationsentität 321 eine dem mobilen Kommunikationsendgerät 330 am nächstgelegene Kommunikationsentität 311 bestimmen. Die nächstgelegene Kommunikationsentität wird dabei aus der ersten 311 und der zweiten 321 Kommunikationsentität bestimmt. Beispielsweise kann der Subnetzwerkmanager 350 dazu einen ersten Abstand zwischen geographischer Position des mobilen Kommunikationsendgeräts 330 und erster geographischer Position der ersten Kommunikationsentität 311 bestimmen; einen zweiten Abstand zwischen geographischer Position des mobilen Kommunikationsendgeräts 330 und zweiter geographischer Position der zweiten Kommunikationsentität 321 bestimmen; und die nächstgelegene Kommunikationsentität als erste Kommunikationsentität 311 bestimmen, wenn der erste Abstand kleiner als der zweite Abstand ist; oder als zweite Kommunikationsentität 321 bestimmen, wenn der zweite Abstand kleiner als der erste Abstand ist.

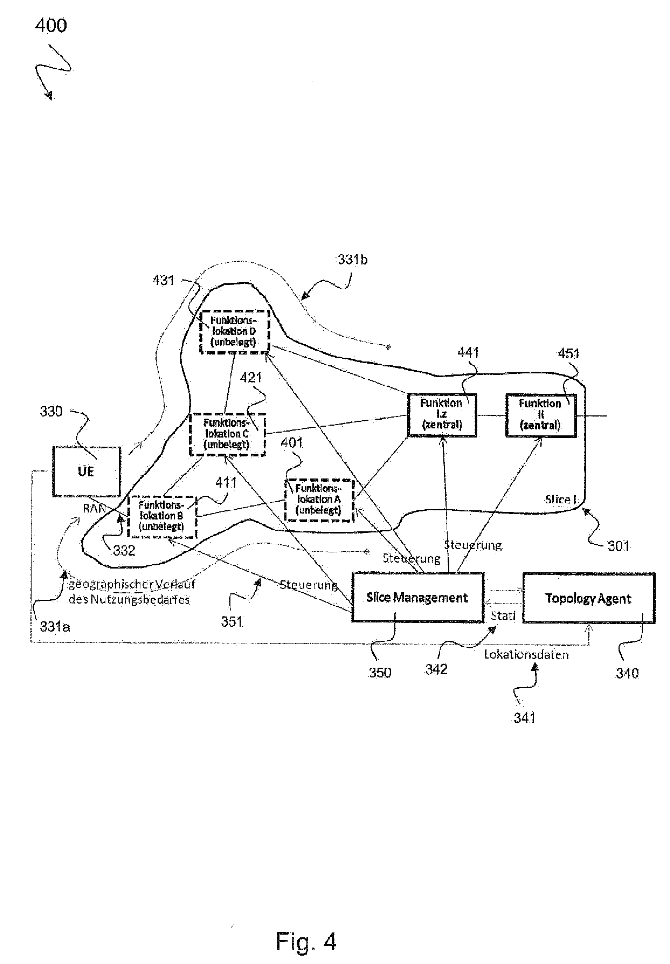

Der Subnetzwerkmanager 350 kann dann der nächstgelegenen Kommunikationsentität, z.B. gemäß Figur 3 der ersten Kommunikationsentität 311 Kommunikationsressourcen 312, 313, 314 des Subnetzwerks 301 gemäß der Netzwerkfunktion der nächstgelegenen Kommunikationsentität 311 zuordnen. Ferner kann der Subnetzwerkmanager 350 dem mobilen Kommunikationsendgerät 330 zugeordnete Kommunikationsressourcen der nicht-nächstgelegenen Kommunikationsentität, beispielsweise der zweiten Kommunikationsentität 321 gemäß der Darstellung in Fig. 3, freigeben. Der Subnetzwerkmanager 350 kann ferner die Netzwerkfunktion der nicht-nächstgelegenen Kommunikationsentität 321 und die Netzwerkfunktion der nächstgelegenen Kommunikationsentität 311 zum dynamischen Umschalten von Kommunikationsressourcen des Subnetzwerks 301 von der nicht-nächstgelegenen Kommunikationsentität 321 zu der nächstgelegenen Kommunikationsentität 311 ansteuern, beispielsweise wie unten zu den Figuren 4 bis 8 näher beschrieben.

Der Subnetzwerkmanager 350 kann der nicht-nächstgelegenen Kommunikationsentität 321 eine erste Instanz der ersten Netzwerkfunktion zuordnen und der nächstgelegenen Kommunikationsentität 311 eine zweite Instanz der ersten Netzwerkfunktion zuordnen, beispielsweise wie unten zu den Figuren 4 bis 8 näher beschrieben. Der Subnetzwerkmanager 350 kann die erste Netzwerkfunktion zur Zuordnung von leerlaufenden Kommunikationsressourcen des Subnetzwerks 301 zu der ersten Kommunikationsentität 311 oder zur Zuordnung von leerlaufenden Kommunikationsressourcen eines anderen Subnetzwerks, z.B. eines der Subnetzwerke 302, 303, zu der ersten Kommunikationsentität 311 einstellen, beispielsweise wie unten zu den Figuren 4 bis 8 näher beschrieben.

Das Kommunikationsnetzwerk 300 kann ferner eine oder mehrere zentrale Kommunikationsressourcen, umfassen, beispielsweise zentrale Kommunikationsressourcen 441 wie unten zu Figur 4 beschrieben. Der Subnetzwerkmanager 350 kann die erste Netzwerkfunktion der ersten Kommunikationsentität 311 zur Zuordnung der zentralen Kommunikationsressource zu der ersten Kommunikationsentität 311 einstellen.

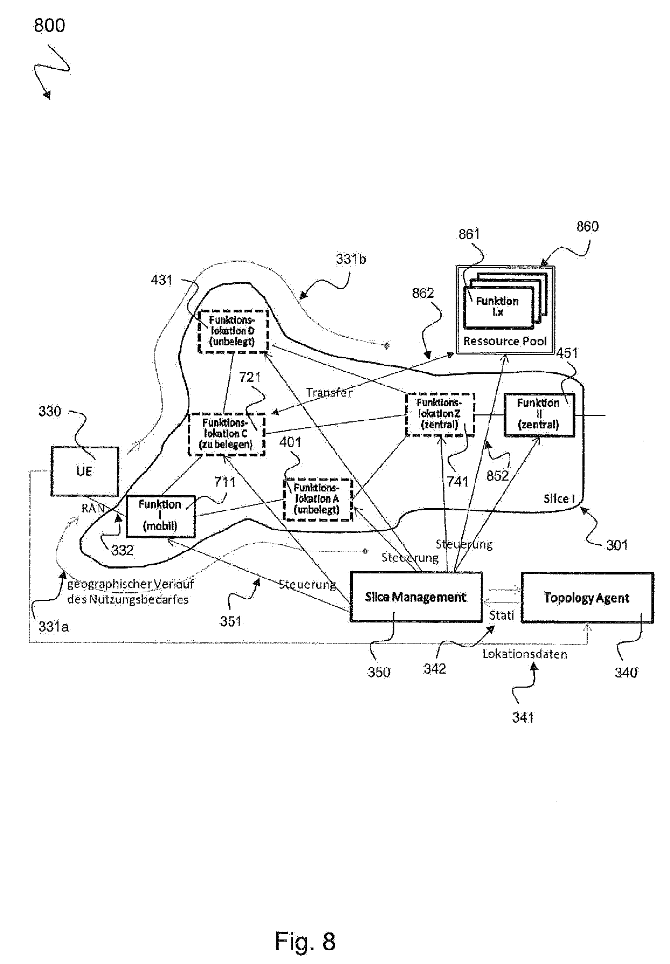

Das Kommunikationsnetzwerk 300 kann ferner einen zentralen Pool von Kommunikationsressourcen aufweisen, beispielsweise einen zentralen Pool 860 von Kommunikationsressourcen 861, wie unten zu Figur 8 beschrieben. Der Subnetzwerkmanager 350 kann die erste Netzwerkfunktion der ersten Kommunikationsentität 311 zur Zuordnung von Kommunikationsressourcen des zentralen Pools von Kommunikationsressourcen zu der ersten Kommunikationsentität 311 einstellen.

Fig. 4 zeigt eine schematische Darstellung eines Kommunikationsnetzwerkes 400 gemäß einer beispielhaften Ausführungsform mit einem Subnetzwerk 301, auch als Slice bezeichnet, bzw. Slice I 301 zur Kennzeichnung, dass es sich um eines von mehreren Slices handelt, mit Kommunikationsentitäten mit zentralen Netzwerkfunktionen 441, 451 und Kommunikationsentitäten mit dezentralen Netzwerkfunktionen 401, 411, 421, 431, einem Positionsmonitor 340, auch als "Topology Agent", d.h. Topologie-Agent bezeichnet und einem Subnetzwerkmanager 350, auch als "Slice Management" bezeichnet. Das Kommunikationsnetzwerk 400 stellt ein Beispiel einer Realisierung des Kommunikationsnetzwerkes 300 gemäß Figur 3 dar. Das UE, d.h. das mobile Kommunikationsendgerät 330 bewegt sich auf einem Bewegungsprofil 331a, 331 b, das den geographischen Verlauf des Nutzungsbedarfs darstellt.

In der Slice I 301 sind beispielhaft die vier Kommunikationsentitäten mit dezentralen Netzwerkfunktionen 401, 411, 421, 431 und die zwei Kommunikationsentitäten mit zentralen Netzwerkfunktionen 441, 451 dargestellt, die untereinander vernetzt sind. In der Darstellung der Figur 4 befindet sich das UE 330 auf seinem Bewegungsprofil 331 a gerade an einer geographischen Position, die am nächstgelegen zu der geographischen Position der zweiten dezentralen Kommunikationsentität 411 ist, so dass das Slice Management 350 die Netzwerkfunktion B der zweiten dezentralen Kommunikationsentität 411 entsprechend ansteuert 351, Kommunikationsressourcen des Slice I an der Funktionslokation B für das UE 330 bereitzustellen. Daneben kann das Slice Management 350 auch zentrale Ressourcen des Slice I 301, beispielsweise über Ansteuerung der Netzwerkfunktion I.z der ersten zentralen Kommunikationsentität 441 oder sogar zentrale Ressourcen eines anderen Subnetzwerkes, beispielsweise des zweiten Subnetzwerks 302 über Ansteuerung der Netzwerkfunktion II der zweiten zentralen Kommunikationsentität 451 zur Verfügung stellen.

Bewegt sich das UE 330 auf seinem Bewegungsprofil 331a, 331 b weiter, so kommt es an eine geographische Position, die näher an der geographischen Position der dritten dezentralen Kommunikationsentität 421 gelegen ist als an derjenigen der zweiten dezentralen Kommunikationsentität 411. Das Slice Management 350 erkennt diese Änderung aus der stetigen Auswertung der Lokationsdaten 341, die es von dem Topology Agent 340 erhält und ändert dann entsprechend die Netzwerkfunktionen B der zweiten dezentralen Kommunikationsentität 411 und C der dritten dezentralen Kommunikationsentität 421. Kommunikationsressourcen werden von der zweiten dezentralen Kommunikationsentität 411 abgezogen und der dritten dezentralen Kommunikationsentität 421 über Steuerung der jeweiligen Netzwerkfunktionen zur Verfügung gestellt, beispielsweise entsprechend der obigen Darstellung zu Figur 3.

Das Slice Management 350 sorgt somit für eine geeignete Slice Ressourcenoptimierung mit dem Ziel, sicherzustellen, dass benötigte Funktionen am benötigten geographischen Standort zum benötigten Zeitpunkt innerhalb der Slice bereitgestellt werden. Insbesondere wird damit eine stabile und vorhersagbare Latenzzeit (z.B. für taktile oder verteilte Anwendungen) ermöglicht. Dafür werden in verlässlicher Weise Funktionen und Funktionsressourcen lokal bereitgestellt oder an den Ort des Bedarfes migriert, wie im Folgenden beschrieben.

Der Topologie-Agent 340 analysiert und kontrolliert beispielsweise die geographische Funktionsressourcenverteilung basierend auf dem Funktionsressourcenanforderungsprofil und dem Status zur Laufzeit. Grundlegende Aufgaben können Folgendes umfassen: die fortwährende Überwachung der Übereinstimmung von Ressourcenanforderung und lokaler Ressourcenverfügbarkeit (hinsichtlich Ressourcenanforderung und geographischer Abdeckung), die fortlaufende Optimierung und Anpassung an die Laufzeitanforderungen, sowie das proaktive Ressourcenmanagement zur Steigerung der Nutzungseffizienz. Der Topologie-Agent 340 kann dazu beispielsweise die Lokationsdaten 341 aus der Ortsbestimmung des/der Benutzerendgeräte (UE) 330 nutzen und diese verwalten, z.B. als Slice-Mobilitätsdatenprofil.

Das Slice-Management 350 kann, beispielsweise im Kontext der NGMN-Architektur wie in den Figuren 1 und 2 dargestellt, in der Ressourcensteuerung oberhalb der Infrastrukturschicht 105 verortet sein und die Slice- oder Ressourcensteuerung übernehmen, inklusive der Installation und Konfiguration aller Funktionen in der Slice. Basierend auf der Weisung des Topologie-Management bzw. des Topologie-Agenten 340 kann die dynamische Zuweisung von Funktionen zu Funktionslokationen erfolgen, z.B. entsprechend der Benutzer-/Anwendungsanforderungen.

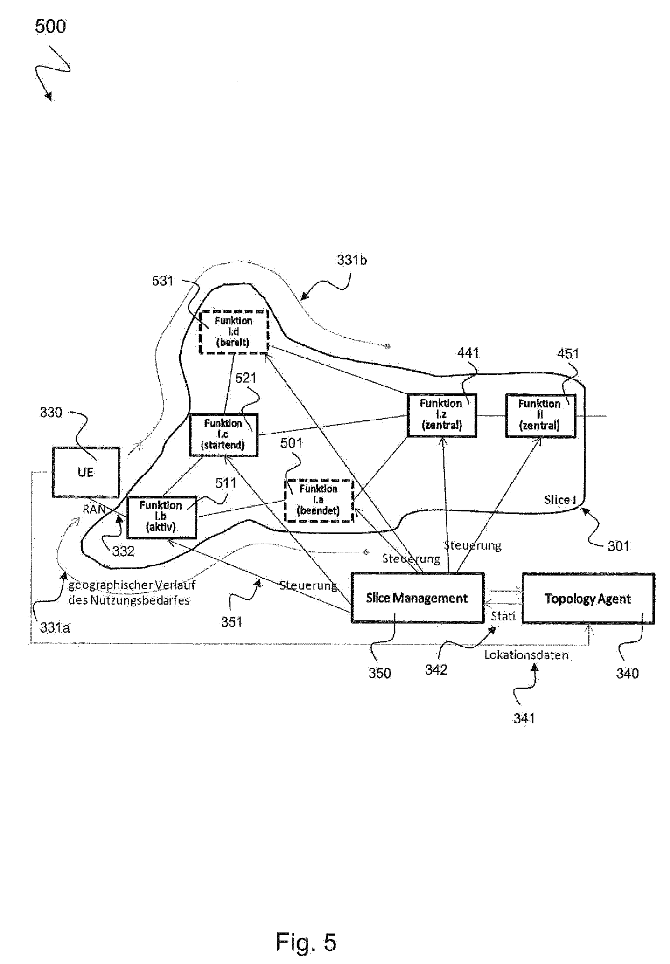

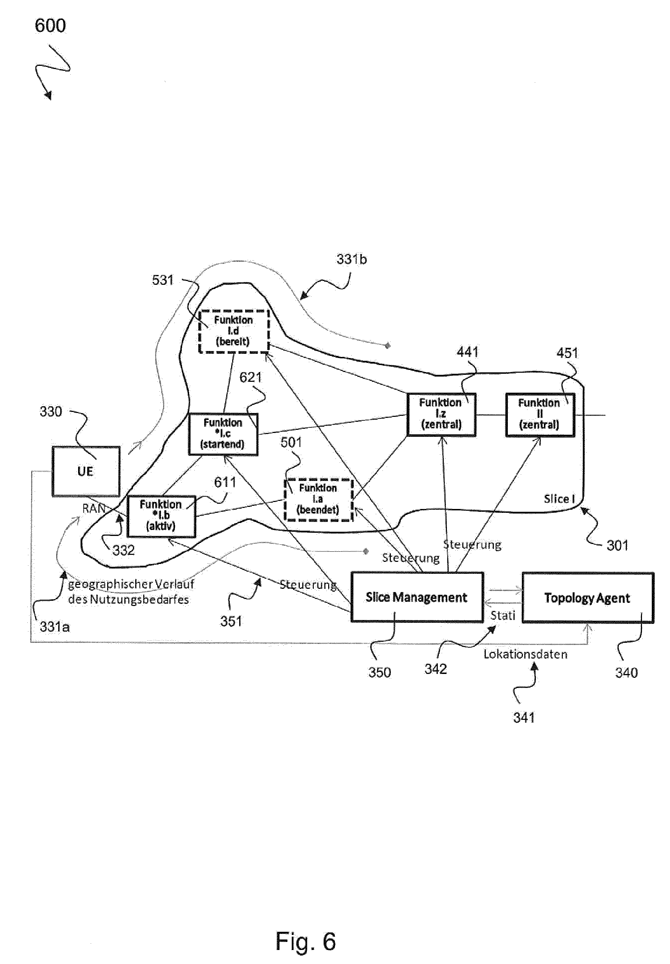

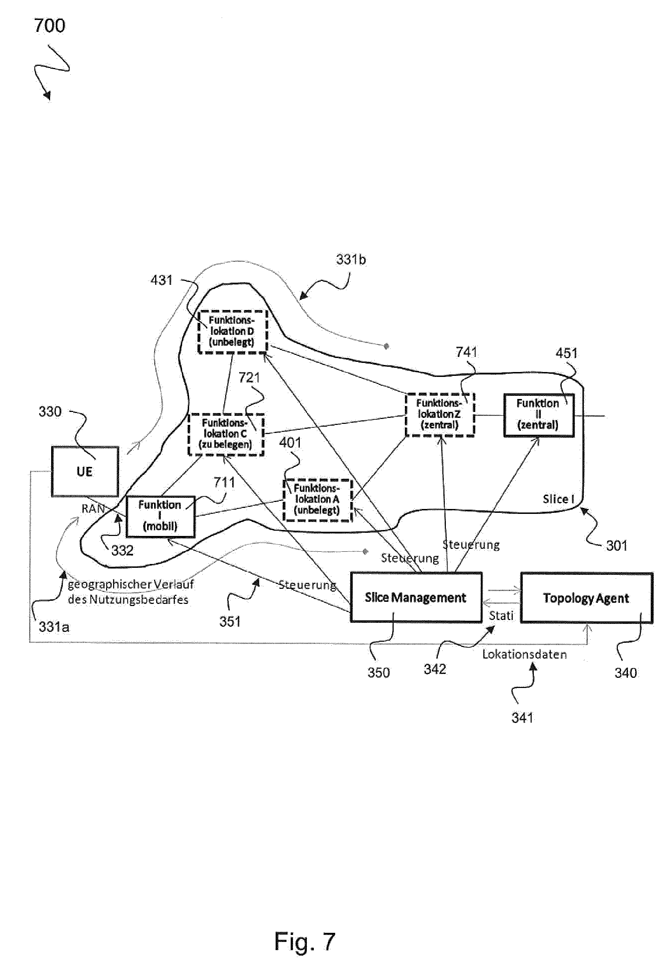

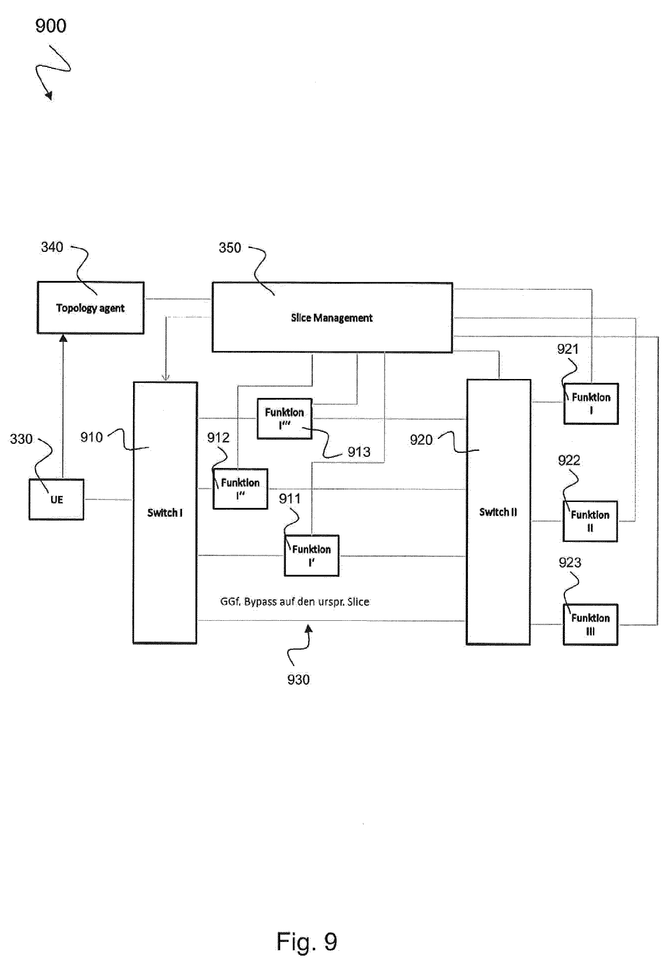

Der Einsatz eines Ressourcenpools ermöglicht die schnelle und einfache (Wieder-) Verwendung und Zuweisung von funktionalen Ressourcen. Die Slice Ressourcenoptimierung ermöglicht eine Anpassung der geographischen und funktionalen Abdeckung der Slice 301 zur Unterstützung von Anwendungen mit erhöhten Mobilitäts- und QoS (Quality of Service)-Anforderungen, z.B. taktile Anwendungen mit Echtzeitanforderungen. Es kann damit ein bedarfsgerechtes und dynamisches Hoch- und Herunterregeln von Funktionen am Ort des Bedarfes realisiert werden, so dass sicherstellt werden kann, dass die passende Funktionsressource am richtigen Standort zur richtigen Zeit vorliegt und somit eine hohe Nutzungseffizienz erreicht werden kann. Als Varianten der Ressourcenbereitstellung können die Folgenden, in den Figuren 5 bis 8 näher beschriebenen Szenarien realisiert werden: 1) Instanziierung benötigter Funktionen an der Nutzerlokation, gemäß geographischem Bedarfsverlauf, gemäß Figur 5. 2) Instanziierung benötigter Funktionen an der Nutzerlokation, durch Zugriff auf leer-laufende Standardinstanzen oder leer-laufende Instanzen der gleichen Funktion aus anderen Slices gemäß Figur 6. 3) Migration von vorhandener Funktion an die Nutzerlokation, durch Transfer aus zentraler Lokation an den jeweiligen mobilen Standort, gemäß Figur 7. 4) Migration von vorhandener Funktion an die Nutzerlokation, durch Transfer zwischen einem zentralen Funktions-Ressourcen-Pool und jeweiligem mobilen Standort, gemäß Figur 8. Eine dynamische Implementierung kann mittels Switches erfolgen, gemäß Figur 9.

Fig. 5 zeigt eine schematische Darstellung eines Kommunikationsnetzwerkes 500 gemäß einer beispielhaften Ausführungsform, bei dem die Netzwerkfunktionen an der Nutzerposition gemäß einem geographischen Bedarfsverlauf instanziiert werden, beispielsweise entsprechend dem Aufrufen einer Instanz 210a, 211a, 212a der Netzwerkfunktion, wie oben zu Figur 2 dargestellt.

Das Kommunikationsnetzwerk 500 ist eine beispielhafte Implementierung des oben zu Figur 4 beschriebenen Kommunikationsnetzwerkes 400, wobei benötige Funktionen an der Nutzerlokation instanziiert werden können entsprechend dem geographischen Bedarfsverlauf, der durch die Ortslinie 331 a, 331 b des UEs 330 dargestellt ist.

Im Gegensatz zu Figur 4, in der die vier Kommunikationsentitäten mit dezentralen Netzwerkfunktionen 401, 411,421, 431 noch als unbelegt gekennzeichnet sind, ist in Figur 5 die erste Kommunikationsentität mit dezentraler Netzwerkfunktionen 501 gerade beendet, die zweite Kommunikationsentität mit dezentraler Netzwerkfunktionen 511 gerade aktiv, die dritte Kommunikationsentität mit dezentraler Netzwerkfunktionen 521 gerade startend und die vierte Kommunikationsentität mit dezentraler Netzwerkfunktionen 531 gerade in Bereitschaft. Dies entspricht dem geographischen Verlauf des Nutzungsbedarfs 331a, 331b, welcher über den Topologie-Agenten 340 dem Slice Management 350 bereitgestellt wird, so dass das Slice Management 350 die entsprechenden Netzwerkfunktionen 501, 511, 521, 531 dem Bewegungsprofil entsprechend anpassen kann. Das UE 330 hat sich von erster zu zweiter Kommunikationsentität bewegt, wo es gerade verweilt und bewegt sich weiter zu dritter und vierter Kommunikationsentität, wo es erwartet wird. Damit ist für den momentanen Zustand, der in Figur 5 skizziert ist, die erste Netzwerkfunktion 501 bereits beendet, die zweite 511 ist gerade aktiv, die dritte 521 startet gerade während die vierte 531 noch in Bereitschaft ist.

Fig. 6 zeigt eine schematische Darstellung eines Kommunikationsnetzwerkes 600 gemäß einer beispielhaften Ausführungsform, bei dem auf leer-laufende Instanzen von Netzwerkfunktionen zugegriffen wird.

Das Kommunikationsnetzwerk 600 ist eine beispielhafte Implementierung des oben zu Figur 5 beschriebenen Kommunikationsnetzwerkes 500, wobei benötige Funktionen an der Nutzerlokation durch Zugriff auf leerlaufende Standardinstanzen oder leerlaufende Instanzen der gleichen Funktion aus anderen Slices instanziiert werden können, beispielsweise entsprechend dem Aufrufen einer Instanz 210a, 211a, 212a der Netzwerkfunktion, wie oben zu Figur 2 dargestellt.

Beispielsweise können die zweite und dritte Kommunikationsentitäten mit ihren entsprechenden Netzwerkfunktionen I.b und I.c durch Aufruf von Netzwerkinstanzen *I.b 611 und *I.c 621 initialisiert werden. Das Zeichen * (Stern) bedeutet hier den Aufruf einer Instanz der jeweiligen Netzwerkfunktion. Zum Beispiel kann die Netzwerkfunktion I.b durch Aufruf einer leerlaufenden Standardinstanz *I.b des Slice I 301 initialisiert werden. Oder es kann die Netzwerkfunktion I.c durch Aufruf einer leerlaufenden Instanz *I.c der gleichen Funktion aus einem anderen Slice, beispielsweise dem Slice II 302 initialisiert werden.

Fig. 7 zeigt eine schematische Darstellung eines Kommunikationsnetzwerkes 700 gemäß einer beispielhaften Ausführungsform, bei dem vorhandene Netzwerkfunktionen von zentraler Position auf den jeweiligen mobilen Standort migriert werden.

Das Kommunikationsnetzwerk 700 ist eine beispielhafte Implementierung des oben zu Figur 4 beschriebenen Kommunikationsnetzwerkes 400, wobei vorhandene Funktionen durch Transfer aus zentraler Lokation an den jeweiligen mobilen Standort der Nutzerlokation migriert werden.

Beispielsweise kann die Netzwerkfunktion der zweiten dezentralen Kommunikationsentität 711 (Funktion I mobil) auf Kommunikationsressourcen zugreifen, die über die dritte dezentrale Kommunikationsentität 721 von der zweiten zentralen Kommunikationsentität 741 auf den mobilen Standort, d.h. zu der zweiten dezentralen Kommunikationsentität 711 migriert werden. Alternativ können auch Kommunikationsressourcen von der ersten und der vierten dezentralen Kommunikationsentität 401, 431 zu der zweiten dezentralen Kommunikationsentität 711 migriert werden.

Fig. 8 zeigt eine schematische Darstellung eines Kommunikationsnetzwerkes 800 gemäß einer beispielhaften Ausführungsform, bei dem vorhandene Netzwerkfunktionen von einem zentralen Ressourcenpool auf den jeweiligen mobilen Standort transferiert werden.

Das Kommunikationsnetzwerk 800 ist eine beispielhafte Implementierung des oben zu Figur 7 beschriebenen Kommunikationsnetzwerkes 700, wobei vorhandene Netzwerkfunktionen von einem zentralen Ressourcenpool 860 auf den jeweiligen mobilen Standort transferiert werden.

Beispielsweise kann die Netzwerkfunktion der zweiten dezentralen Kommunikationsentität 711 (Funktion I mobil) auf Kommunikationsressourcen zugreifen, die über die dritte dezentrale Kommunikationsentität 721 von dem Ressourcenpool 860 zu der zweiten dezentralen Kommunikationsentität 711 migriert werden. Die Steuerung 852 des Ressourcenpools 860 kann von dem Slice Management 750 übernommen werden, welche den Transfer 862 initiieren kann. In dem Ressourcenpool 860 stehen verschiedenste Netzwerkfunktionen 861 zur Verfügung.

Fig. 9 zeigt eine schematische Darstellung einer beispielhaften dynamischen Implementierung eines Kommunikationsnetzwerkes 900 mittels Schalter gemäß einer beispielhaften Ausführungsform.

Das Kommunikationsnetzwerk 900 ist eine beispielhafte Implementierung des oben zu Figur 3 beschriebenen Kommunikationsnetzwerkes 300, wobei das Slice Management 350 sowohl die einzelnen Netzwerkfunktionen 911 (Funktion I'), 912 (Funktion I"), 913 (Funktion I'"), 921 (Funktion I), 922 (Funktion II), 923 (Funktion III) als auch die Schalter 910, 920 zur Verschaltung der Netzwerkfunktionen ansteuert. In dem Beispiel der Figur 9 ist das UE 330 über einen ersten Schalter 910 an die Netzwerkfunktionen 911 (Funktion I'), 912 (Funktion I"), 913 (Funktion I'") geschaltet, welche dann ihrerseits über einen zweiten Schalter 920 an die Netzwerkfunktionen 921 (Funktion I), 922 (Funktion II), 923 (Funktion III) geschaltet sind. Die Netzwerkfunktionen 911 (Funktion I'), 912 (Funktion I"), 913 (Funktion I'") können über einen Bypass 930 überbrückt werden. Damit können dem UE 330 über Steuerung des Slice Managements 340 die erforderlichen Kommunikationsressourcen bereitgestellt werden, die das UE 330 am jeweiligen geographischen Standort gerade benötigt.

Die Funktion I 921 sollte nahe am UE 330 gelegen sein. Das kann durch mobile Funktionen wie oben beschrieben realisiert werden. Die dynamische Umschaltung kann mittels zwei Switches (Schalter) erfolgen. Der Switch I 910 schaltet das UE 330 auf die jeweilige Funktion gemäß der Lokalisierung. Switch II 920 schaltet die Funktionen des Slice 301 auf die mobile Funktion um. Dabei werden die Eingänge und Ausgänge der stationären Funktionen auf die mobile Funktion geschaltet.

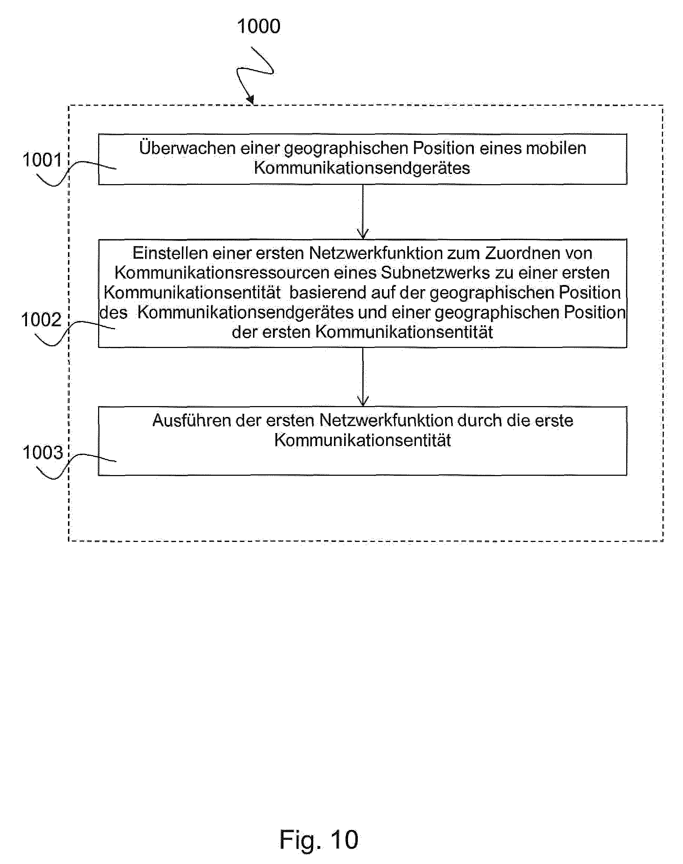

Fig. 10 zeigt eine schematische Darstellung eines Verfahrens 1000 zur Steuerung von Kommunikationsressourcen eines Kommunikationsnetzwerks mit einer Mehrzahl von Subnetzwerken gemäß einer beispielhaften Ausführungsform.

Das Verfahren 1000 dient zur Steuerung von Kommunikationsressourcen eines Kommunikationsnetzwerks mit einer Mehrzahl von Subnetzwerken, wobei zumindest ein Subnetzwerk sich über einen geographischen Bereich erstreckt und eine erste Kommunikationsentität umfasst, die an einer ersten geographischen Position innerhalb des geographischen Bereichs des Subnetzwerks angeordnet ist. Das Verfahren umfasst einen ersten Schritt 1001: Überwachen einer geographischen Position zumindest eines mobilen Kommunikationsendgeräts. Das Verfahren 1000 umfasst einen zweiten Schritt 1002: Einstellen einer ersten Netzwerkfunktion zum Zuordnen von Kommunikationsressourcen des Subnetzwerks zu der ersten Kommunikationsentität basierend auf der geographischen Position des zumindest einen mobilen Kommunikationsendgeräts und der ersten geographischen Position der ersten Kommunikationsentität. Das Verfahren 1000 umfasst einen dritten Schritt 1003: Ausführen der ersten Netzwerkfunktion des Subnetzwerks durch die erste Kommunikationsentität.

Das Verfahren 1000 kann beispielsweise in einem Kommunikationsnetzwerk, wie in den Figuren 1 bis 9 beschrieben, eingesetzt werden.

Das Kommunikationsnetzwerk 300 kann beispielsweise ein Netzwerk einer fünften Generation (5G) oder einer weiteren Generation sein, wie z.B. in den Figuren 1 und 2 beschrieben. Das Subnetzwerk 301 kann ein Slice des Kommunikationsnetzwerkes 300 sein.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 10 beschriebene Verfahren 1000 oder die zu den Figuren 1 bis 9 beschriebenen Vorgänge ausgeführt werden kann, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 1000 auszuführen oder die Netzkomponenten der in den Figuren 1 bis 9 beschriebenen Kommunikationsnetze zu implementieren bzw. zu steuern.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz wie in den Figuren 1 bis 9 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: 5G Systemarchitektur
- 101:: Zugangsgerät, Kommunikationsendgerät, UE
- 102:: Zugangstechnologie
- 103:: Anwendungsschicht
- 104:: Aktivierungsschicht
- 105:: Infrastruktur & Ressourcenschicht
- 106:: Management & Instrumentierungsschicht

- 200:: 5G Kommunikationsnetzwerk mit mehreren Slices
- 210a:: erste Slice Instanz
- 210b:: erste Netzwerk Slice
- 211a:: zweite Slice Instanz
- 211b:: zweite Netzwerk Slice
- 212a:: dritte Slice Instanz
- 212b:: dritte Netzwerk Slice
- 213:: Slice Komposition
- 221:: abstrahierte Objekte
- 222:: virtuelle Netzwerkfunktionen
- 223:: kombinierte Objekte
- 224:: aggregierte Objekte
- 225:: Objektbibliothek
- 231:: Zugangsknoten
- 232:: Zugangsknoten
- 233:: Zugangsknoten
- 234:: virtueller Netzwerkknoten
- 235:: virtueller Netzwerkknoten
- 236:: virtueller Netzwerkknoten
- 237:: virtueller Netzwerkknoten
- 238:: Computerknoten
- 239:: Computerknoten
- 240:: Computerknoten
- 251:: Infrastrukturdienste
- 300:: Kommunikationsnetzwerk bzw. Kommunikationssystem
- 301:: erstes Subnetzwerk bzw. Slice I oder einfach Subnetzwerk
- 302:: zweites Subnetzwerk bzw. Slice II
- 303:: drittes Subnetzwerk bzw. Slice III
- 311:: erste Kommunikationsentität mit erster Netzwerkfunktion, auch nächstgelegene Kommunikationsentität
- 312,313, 314:: Netzwerkkomponenten, die der ersten Kommunikationsentität mittels der ersten Netzwerkfunktion zugewiesen werden
- 321:: zweite Kommunikationsentität mit zweiter Netzwerkfunktion, auch nichtnächstgelegene Kommunikationsentität
- 322,323, 324:: Netzwerkkomponenten, die der zweiten Kommunikationsentität mittels der zweiten Netzwerkfunktion zugewiesen werden
- 330:: mobiles Kommunikationsendgerät bzw. UE
- 331a, 331b:: geographischer Positionsverlauf des mobilen Kommunikationsendgeräts
- 332:: Kommunikationszugang des UE zu erstem Subnetzwerk 301, z.B. über RAN (Radio Access Network)
- 340:: Positionsmonitor bzw. Topology-Agent
- 341:: Lokationsdaten des mobilen Kommunikationsendgeräts
- 342:: Statusmeldung des Positionsmonitors an den Subnetzwerkmanager
- 350:: Subnetzwerkmanager bzw. Slice Management
- 351:: Steuerung der ersten Kommunikationsentität durch den Subnetzwerkmanager

- 400:: Kommunikationsnetzwerk bzw. Kommunikationssystem
- 401:: Funktionslokation A (unbelegt) bzw. Kommunikationsentität mit Netzwerkfunktion A
- 411:: Funktionslokation B (unbelegt) bzw. Kommunikationsentität mit Netzwerkfunktion B
- 421:: Funktionslokation C (unbelegt) bzw. Kommunikationsentität mit Netzwerkfunktion C
- 431:: Funktionslokation D (unbelegt) bzw. Kommunikationsentität mit Netzwerkfunktion D
- 441:: Funktion I.z (zentral) bzw. Kommunikationsentität mit zentraler Netzwerkfunktion I.z
- 451:: Funktion II (zentral) bzw. Kommunikationsentität mit zentraler Netzwerkfunktion II

- 500:: Kommunikationsnetzwerk bzw. Kommunikationssystem
- 501:: Funktion I.a (beendet) bzw. Kommunikationsentität mit Netzwerkfunktion I.a
- 511:: Funktion I.b (aktiv) bzw. Kommunikationsentität mit Netzwerkfunktion I.b
- 521:: Funktion I.c (startend) bzw. Kommunikationsentität mit Netzwerkfunktion I.c
- 531:: Funktion I.d (bereit) bzw. Kommunikationsentität mit Netzwerkfunktion I.d

- 600:: Kommunikationsnetzwerk bzw. Kommunikationssystem
- 611:: Funktion *I.b (aktiv) bzw. Kommunikationsentität mit Netzwerkfunktion *I.b
- 621:: Funktion *I.c (startend) bzw. Kommunikationsentität mit Netzwerkfunktion *I.c

- 700:: Kommunikationsnetzwerk bzw. Kommunikationssystem
- 711:: Funktion I (mobil) bzw. Kommunikationsentität mit Netzwerkfunktion I
- 721:: Funktionslokation C (zu belegen) bzw. Kommunikationsentität mit Netzwerkfunktion C
- 741:: Funktionslokation Z (zentral) bzw. Kommunikationsentität mit zentraler Netzwerkfunktion Z

- 800:: Kommunikationsnetzwerk bzw. Kommunikationssystem
- 852:: Steuerung des Ressourcenpools durch Subnetzwerkmanager bzw. Slice Management
- 860:: Ressourcenpool mit Netzwerkfunktionen
- 861:: Netzwerkfunktion aus Ressourcenpool
- 862:: Transfer von Netzwerkfunktion aus Ressourcenpool an zur Funktionslokation C

- 900:: Kommunikationsnetzwerk bzw. Kommunikationssystem
- 910:: Schalter I bzw. Switch I
- 911:: Funktion I'
- 912:: Funktion I"
- 913:: Funktion I"'
- 920:: Schalter II bzw. Switch II
- 921:: Funktion I
- 922:: Funktion II
- 923:: Funktion III
- 930:: Bypass auf ursprünglichen Slice

- 1000:: Verfahren zur Steuerung von Kommunikationsressourcen eines Kommunikationsnetzwerks mit einer Mehrzahl von Subnetzwerken
- 1001:: erster Schritt: Überwachen der geographischen Position des UE
- 1002:: zweiter Schritt: Erstellen der ersten Netzwerkfunktion
- 1003:: dritter Schritt: Ausführen der ersten Netzwerkfunktion

## Patentansprüche

1. Kommunikationsnetzwerk (300), mit:
einem Positionsmonitor (340), der ausgebildet ist, eine geographische Position (341) zumindest eines mobilen Kommunikationsendgeräts (330) zu überwachen; und
einer Mehrzahl von Subnetzwerken (301, 302, 303), wobei zumindest ein Subnetzwerk (301) sich über einen geographischen Bereich erstreckt und folgendes umfasst:
eine erste Kommunikationsentität (311), die an einer ersten geographischen Position innerhalb des geographischen Bereichs des Subnetzwerks (301) angeordnet ist, und ausgebildet ist, eine erste Netzwerkfunktion des Subnetzwerks (301) auszuführen, wobei die erste Netzwerkfunktion eine Zuordnung von Kommunikationsressourcen (312, 313, 314) des Subnetzwerks (301) zu der ersten Kommunikationsentität (311) festlegt; und
einen Subnetzwerkmanager (350) zur Steuerung (351) der ersten Kommunikationsentität (311), wobei der Subnetzwerkmanager (350) ausgebildet ist, basierend auf der geographischen Position (341) des zumindest einen mobilen Kommunikationsendgeräts (330) und der ersten geographischen Position der ersten Kommunikationsentität (311), die erste Netzwerkfunktion der ersten Kommunikationsentität (311) einzustellen.

2. Kommunikationsnetzwerk (300) nach Anspruch 1,
wobei das Kommunikationsnetzwerk (300) ein Netzwerk einer fünften Generation (5G) oder einer weiteren Generation ist, und wobei das Subnetzwerk (301) ein Slice des Kommunikationsnetzwerkes (300) ist.

3. Kommunikationsnetzwerk (300) nach Anspruch 1 oder 2,
wobei der Subnetzwerkmanager (350) ausgebildet ist, die erste Netzwerkfunktion basierend auf einem Ressourcenanforderungsprofil des zumindest einen mobilen Kommunikationsendgeräts (330) und einer Verfügbarkeit von Kommunikationsressourcen (312, 313, 314) der ersten Kommunikationsentität (311) einzustellen.

4. Kommunikationsnetzwerk (300) nach einem der vorstehenden Ansprüche,
wobei der Subnetzwerkmanager (350) ausgebildet ist, eine Identifizierung des zumindest einen mobilen Kommunikationsendgeräts (330) zu empfangen, und die erste Netzwerkfunktion der ersten Kommunikationsentität (311) basierend auf der Identifizierung des zumindest einen mobilen Kommunikationsendgeräts (330) einzustellen.

5. Kommunikationsnetzwerk (300) nach einem der vorstehenden Ansprüche,
wobei das Subnetzwerk (301) eine zweite Kommunikationsentität (321) umfasst, die an einer zweiten geographischen Position innerhalb des geographischen Bereichs des Subnetzwerks (301) angeordnet ist, und ausgebildet ist, eine zweite Netzwerkfunktion des Subnetzwerks (301) auszuführen, wobei die zweite Netzwerkfunktion eine Zuordnung von Kommunikationsressourcen (322, 323, 324) des Subnetzwerks (301) zu der zweiten Kommunikationsentität (321) festlegt.

6. Kommunikationsnetzwerk (300) nach Anspruch 5,
wobei der Subnetzwerkmanager (350) ausgebildet ist, basierend auf der geographischen Position des zumindest einen mobilen Kommunikationsendgeräts (330) und der zweiten geographischen Position der zweiten Kommunikationsentität (321), die zweite Netzwerkfunktion der zweiten Kommunikationsentität (321) einzustellen.

7. Kommunikationsnetzwerk (300) nach Anspruch 6,
wobei der Subnetzwerkmanager (350) ausgebildet ist, basierend auf der geographischen Position des zumindest einen mobilen Kommunikationsendgeräts (330), der ersten geographischen Position der ersten Kommunikationsentität (311) und der zweiten geographischen Position der zweiten Kommunikationsentität (321) eine dem mobilen Kommunikationsendgerät (330) am nächstgelegene Kommunikationsentität (311) zu bestimmen, wobei die nächstgelegene Kommunikationsentität die erste (311) oder die zweite (321) Kommunikationsentität ist.

8. Kommunikationsnetzwerk (300) nach Anspruch 7,
wobei der Subnetzwerkmanager (350) ausgebildet ist, der nächstgelegenen Kommunikationsentität (311) Kommunikationsressourcen (312, 313, 314) des Subnetzwerks (301) gemäß der Netzwerkfunktion der nächstgelegenen Kommunikationsentität (311) zuzuordnen.

9. Kommunikationsnetzwerk (300) nach Anspruch 7 oder 8,
wobei der Subnetzwerkmanager (350) ausgebildet ist, dem mobilen Kommunikationsendgerät (330) zugeordnete Kommunikationsressourcen der nicht-nächstgelegenen Kommunikationsentität (321) aus den beiden Kommunikationsentitäten (311, 321) freizugeben.

10. Kommunikationsnetzwerk (300) nach einem der Ansprüche 7 bis 9,
wobei der Subnetzwerkmanager (350) ausgebildet ist, die Netzwerkfunktion der nicht-nächstgelegenen Kommunikationsentität (321) und die Netzwerkfunktion der nächstgelegenen Kommunikationsentität (311) zum dynamischen Umschalten von Kommunikationsressourcen des Subnetzwerks (301) von der nicht-nächstgelegenen Kommunikationsentität (321) zu der nächstgelegenen Kommunikationsentität (311) anzusteuern.

11. Kommunikationsnetzwerk (300) nach einem der Ansprüche 7 bis 9,
wobei der Subnetzwerkmanager (350) ausgebildet ist, der nicht-nächstgelegenen Kommunikationsentität (321) eine erste Instanz der ersten Netzwerkfunktion zuzuordnen und der nächstgelegenen Kommunikationsentität (311) eine zweite Instanz der ersten Netzwerkfunktion zuzuordnen.

12. Kommunikationsnetzwerk (300) nach einem der vorstehenden Ansprüche,
wobei der Subnetzwerkmanager (350) ausgebildet ist, die erste Netzwerkfunktion zur Zuordnung von leerlaufenden Kommunikationsressourcen des Subnetzwerks (301) zu der ersten Kommunikationsentität (311) oder zur Zuordnung von leerlaufenden Kommunikationsressourcen eines anderen Subnetzwerks (302, 303) zu der ersten Kommunikationsentität (311) einzustellen.

13. Kommunikationsnetzwerk (400) nach einem der vorstehenden Ansprüche, mit:
einer zentralen Kommunikationsressource (441),
wobei der Subnetzwerkmanager (350) ausgebildet ist, die erste Netzwerkfunktion der ersten Kommunikationsentität (411) zur Zuordnung der zentralen Kommunikationsressource (441) zu der ersten Kommunikationsentität (411) einzustellen.

14. Kommunikationsnetzwerk (800) nach einem der vorstehenden Ansprüche, mit einem zentralen Pool (860) von Kommunikationsressourcen (861),
wobei der Subnetzwerkmanager (350) ausgebildet ist, die erste Netzwerkfunktion der ersten Kommunikationsentität (311) zur Zuordnung von Kommunikationsressourcen des zentralen Pools (860) von Kommunikationsressourcen (861) zu der ersten Kommunikationsentität (311) einzustellen.

15. Verfahren (1000) zur Steuerung von Kommunikationsressourcen eines Kommunikationsnetzwerks mit einer Mehrzahl von Subnetzwerken, wobei zumindest ein Subnetzwerk sich über einen geographischen Bereich erstreckt und eine erste Kommunikationsentität umfasst, die an einer ersten geographischen Position innerhalb des geographischen Bereichs des Subnetzwerks angeordnet ist, wobei das Verfahren die folgenden Schritte aufweist:
Überwachen (1001) einer geographischen Position zumindest eines mobilen Kommunikationsendgeräts;
Einstellen (1002) einer ersten Netzwerkfunktion zum Zuordnen von Kommunikationsressourcen des Subnetzwerks zu der ersten Kommunikationsentität basierend auf der geographischen Position des zumindest einen mobilen Kommunikationsendgeräts und der ersten geographischen Position der ersten Kommunikationsentität; und
Ausführen (1003) der ersten Netzwerkfunktion des Subnetzwerks durch die erste Kommunikationsentität.
